Europäisches Patentamt

European Patent Office

Office européen des brevets

(19)

(11) Numéro de publication: **0 006 670**
**A2**

(12)

# DEMANDE DE BREVET EUROPEEN

(21) Numéro de dépôt: 79200334.5

(22) Date de dépôt: **25.06.79**

(51) Int. Cl.³: **A 47 J 37/00**

(30) Priorité: 28.06.78 BE 18954
21.06.79 BE 257887

(71) Demandeur: **Ramella, Pietro, 57, Rue du Centre,
B-5300 Ciney (BE)**

(43) Date de publication de la demande: **09.01.80**
**Bulletin 80/1**

(72) Inventeur: **Ramella, Pietro, 57, Rue du Centre, B-5300
Ciney (BE)**

(84) Etats contractants désignés: **AT CH DE FR GB IT LU
NL SE**

(74) Mandataire: **Bockstael, Daniel, M.F.J. Bockstael
Arenbergstraat 13, B-2000 Anvers (BE)**

(54) **Ustensile culinaire.**

(57) L'invention concerne un ustensile culinaire destiné à
présenter, maintenir chaud et, le cas échéant, à parfaire
la cuisson d'aliments, caractérisé en ce qu'il est principalement constitué par une masse métallique (3) hérissée
de pointes ou dents (16) également métalliques.

EP 0 006 670 A2

0006670

- 1 -

Ustensile culinaire.

L'invention concerne un ustensile culinaire destiné à présenter, maintenir chaud et, le cas échéant, à parfaire la cuisson d'aliments relativement solides.

L'élément principal de l'ustensile selon l'invention est constitué par une masse métallique hérissée de pointes également métalliques destinées à l'embrochage d'aliments détaillés en bouchées.

Ladite masse est destinée à emmagasiner une quantité de chaleur qu'elle restitue ensuite aux aliments, directement et par l'entremise desdits points.

Cette masse hérissée de pointes, appelée ci-après plot ou ratelier, est associée, dans une forme préférée de réalisation, à une table porteuse supportant divers récipients, le tout étant servi à table.

Pour une meilleure compréhension, sont décrites ci-après des réalisations pratiques faisant l'objet des figures 1 à 9 annexées, lesquelles ne présentent évidemment qu'un caractère exemplatif non limitatif.

Dans les dessins :

la figure 1 représente en vue perspective une réalisation conforme à la présente invention;

la figure 2 représente une vue en plan en direction de la flèche F2 de la figure 1;

la figure 3 représente une vue latérale en direction de la flèche F3 de la figure 2;

les figures 4 et 5 représentent en vue de face deux réalisations d'un plot ou ratelier formant l'un des éléments essentiels de l'ustensile culinaire objet de la présente invention;

les figures 6, 7 et 8 représentent, en vue en plan, des variantes de l'ustensile objet de l'invention;

la figure 9 est semblable à la figure 1, l'ustensile culinaire étant représenté chargé.

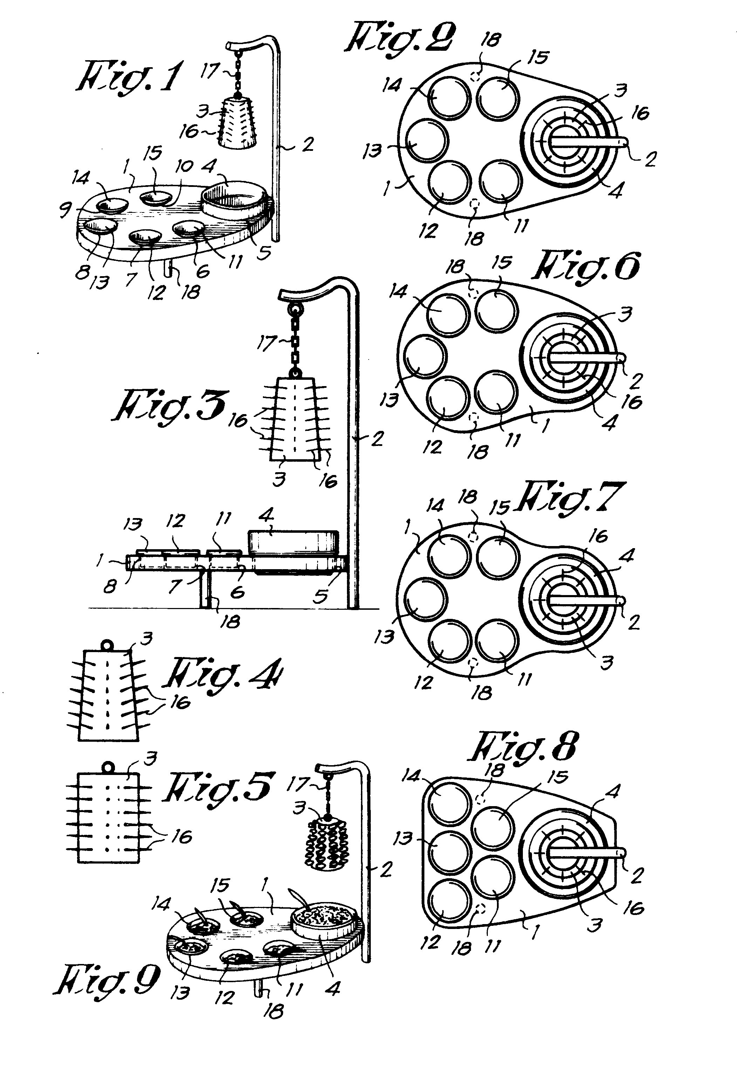

Dans l'exécution selon les figures 1 à 3, l'ustensile se compose substantiellement d'une table porteuse 1, d'une potence 2 solidarisée à ladite table, d'un plot ou ratelier 3 suspendu à ladite potence, en aplomb axial d'un récipient sous-jacent 4 disposé dans un creux 5. Ce récipient est destiné à recevoir un aliment généralement préparé et à former lèchefrite. Ladite table porteuse présente encore un certain nombre de trous 6-7-8-9-10 destinés à recevoir des récipients, 11-12-13-14-15, pouvant contenir des condiments et des sauces de différentes natures, en corrélation avec les produits culinaires ainsi présentés d'une manière originale.

Le plot ou ratelier 3 est conditionné de manière à se présenter, en l'occurrence, sous la forme d'une masse tronconique dont la surface est hérissée de pointes ou dents 16, chacune de ces dents étant destinée à recevoir une portion de viande ou similaire.

Ledit plot ou ratelier 3 est suspendu de façon aisément amovible à la potence 2 par une chaîne 17 de manière à pouvoir tourner autour de son axe virtuel en vue de favoriser l'accès aux portions de viande.

Le pied de la potence 2 s'étend légèrement au-delà de la partie adjacente de la table porteuse, laquelle comporte, d'autre part, des pieds 18 favorisant un bon équilibre de l'ensemble de l'appareil.

La table porteuse présente un nombre d'orifices ou évidements, chacun d'eux étant destiné à recevoir, respectivement à immobiliser, les récipients ad hoc.

Les orifices destinés à recevoir les récipients sont, de préférence, répartis d'une manière symétrique par rapport au plan médian de l'appareil, favorisant ainsi l'accès aux différents récipients contenant les différentes sauces.

En vue de donner à l'appareil un maximum de stabilité, respectivement de sécurité, ladite potence 2 est réalisée à partir d'un méplat de manière à présenter une bonne résistance, respectivement une bonne stabilité de l'ensemble de l'appareil.

Il va de soi que le susdit plot ou ratelier 3 peut présenter toutes formes et toutes dimensions au prorata des applications envisagées, notamment en raison des variantes présentées en rapport avec les produits alimentaires en cause.

Dans le cadre d'une application pratique, il est préconisé de mettre l'appareil culinaire, objet de la présente invention, dans les conditions suivantes : on part du plot ou ratelier 3. Celui-ci est introduit dans un four très chaud, par exemple pendant une durée de l'ordre de 5 à 10 minutes. Pendant ce temps, on prépare les différentes sauces, chacune d'elles étant ensuite mise dans l'un des récipients 11 à 15. Pendant ce temps, on détaille de la viande au choix : boeuf, veau, porc, mouton, etc... Par ailleurs, on procède également à la cuisson du riz et à la cuisson - éventuellement partielle - des morceaux de viande. On sort le plot du four et on embroche les morceaux de viande sur les piques 16. On met le riz dans le grand récipient 4, on suspend le plot à la potence 2 au moyen de la chaîne 17. On apporte le tout sur table ou l'on peut faire flamber la viande au cognac ou autre spiritueux.

L'invention s'étend à toutes formes d'exécution de l'appareil, respectivement à l'utilisation de ce dernier sous toutes formes convenantes.

0006670

Revendications.

1.- Ustensile culinaire destiné à présenter, maintenir chaud et, le cas échéant, à parfaire la cuisson d'aliments, caractérisé en ce qu'il est principalement constitué par une masse métallique (3) hérissée de pointes ou dents (16) également métalliques.

2.- Ustensile culinaire selon la revendication 1, caractérisé en ce que ladite masse (3) est associée, de façon amovible, à un plateau ou table porteuse (1).

3.- Ustensile culinaire selon la revendication 2, caractérisé en ce que la table porteuse (1) présente un certain nombre de trous ou évidements (5-6-7-8-9-10) destinés à recevoir des récipients (4-11-12-13-14-15) pouvant contenir des aliments et des sauces de différentes natures.

4.- Ustensile culinaire selon la revendication 2, caractérisé en ce que le plot ou ratelier (3) est suspendu à une potence (2) solidaire dudit plateau (1), de manière à pouvoir tourner autour de son axe virtuel.

5.- Ustensile culinaire selon la revendication 4, caractérisé en ce que le pied de la potence (2) s'étend légèrement au-delà de la partie adjacente de la table porteuse (1), laquelle comporte, d'autre part, des pieds (18) favorisant le bon équilibre de l'ensemble de l'appareil.

6.- Ustensile culinaire selon la revendication 3, caractérisé en ce que lesdits trous ou évidements (5-6-7-8-9-10) destinés à recevoir les récipients (4-11-12-13-14-15) sont répartis d'une manière symétrique par rapport au plan médian de l'ustensile culinaire.

0006670